# EUROPÄISCHE PATENTANMELDUNG

(11) **EP 2 327 675 A2**
(43) Veröffentlichungstag der Anmeldung: **01.06.2011**
(21) Anmeldenummer: 10450171.3
(22) Anmeldetag: 05.11.2010
(51) Int. Cl.: C04B 41/50

(54) **Verfahren zum Färben von Stein**

(30) Priorität: 10.11.2009 AT 17802009
(71) Anmelder: Poschacher Natursteinwerke GmbH & Co. KG, 4222 St. Georgen/Gusen (AT)
(72) Erfinder: Sümecz, Franz, 2294 Marchegg (AT); Steiner, Gerhard, 4073 Wilhering (AT); Giester, Gerald, 4400 Steyr (AT)
(74) Vertreter: Haffner und Keschmann Patentanwälte OG

(57) **Zusammenfassung**

Bei einem Verfahren zum Färben von Stein unter Verwendung einer wässrigen Zuckerlösung und unter Anwendung von Hitze, wird in der wässrigen Zuckerlösung zumindest ein sauer oder basisch reagierendes Salz gelöst, die so erhaltene Färbelösung auf den Stein aufgebracht und der so behandelte Stein einer Hitzbehandlung unterzogen.

## Beschreibung

Die vorliegende Erfindung betrifft ein Verfahren zum Färben von Stein unter Verwendung einer wässrigen Zuckerlösung und unter Anwendung von Hitze.

Das Färben von Stein unter Verwendung von Zuckerlösungen und unter Anwendung von Hitze ist seit langer Zeit bekannt, wobei bei diesen Verfahren Farbreaktionen des Zuckers, welche unter Hitzeeinwirkung stattfinden, ausgenutzt werden. Um die Farb- bzw. Bräunungsreaktionen zu fördern, wird der zu färbende Stein zusätzlich mit konzentrierter Schwefelsäure behandelt, wobei die wasserentziehende Wirkung der Schwefelsäure den Zucker destabilisiert und die Effektivität der Hitzebehandlung steigert. Diese Färbeverfahren, welche die Verwendung von konzentrierter Schwefelsäure vorsehen, werden nur für geringe Steinmengen und insbesondere zum Färben von Edel- und Halbedelsteinen eingesetzt, da der Umgang mit größeren Mengen von konzentrierter Schwefelsäure zum Färben von Stein in der Baustoffindustrie zu aufwendig und mit einem zu hohen Arbeitsrisiko sowie zu hohen Kosten verbunden ist.

Wenn die Färbung ohne die Verwendung von Säure vonstatten gehen soll, sind zur Herbeiführung der Farbreaktionen sehr hohe Temperaturen erforderlich, was hohe Kosten verursacht und überdies zu einer Verschlechterung der mechanischen Eigenschaften des Steins führt.

Es ist daher Aufgabe der vorliegenden Erfindung, ein Verfahren anzugeben, mit welchem auch größere Steine und insbesondere Steinplatten für die Verwendung als Baumaterial einfach, sicher und kostengünstig gefärbt werden können, wobei die mechanischen Eigenschaften des Steins unbeeinträchtigt bleiben sollen. Zur Lösung dieser Aufgabe ist das Verfahren der eingangs genannten Art erfindungsgemäß dadurch gekennzeichnet, dass in der wässrigen Zuckerlösung zumindest ein sauer oder basisch reagierendes Salz gelöst wird, die so erhaltene Färbelösung auf den Stein aufgebracht und der so behandelte Stein einer Hitzebehandlung unterzogen wird. Dadurch, dass der pH-Wert der Färbelösung durch die Zugabe eines sauer oder basisch reagierenden Salzes eingestellt wird, erfolgt eine Destabilisierung des Zuckers, sodass es relativ leicht zu Farbreaktionen kommen kann.

Mit Vorteil ist das Verfahren hierbei derart weitergebildet, dass in der wässrigen Zuckerlösung zumindest ein sauer reagierendes Salz gelöst wird, die so erhaltene Färbelösung auf den Stein aufgebracht und der so behandelte Stein einer Hitzebehandlung unterzogen wird. Dadurch, dass nun keine konzentrierte Schwefelsäure mehr zum Einsatz gelangen muss, sondern geringe Mengen an Säure an und vor allem nach Eindringen der Färbelösung in Spalten und Poren des Gesteins im Stein gebildet werden, wird eine ausreichend destabilisierende Wirkung auf den Zucker, in aller Regel Saccharose, erreicht, sodass eine relativ moderate Hitzebehandlung zu den gewünschten Farbreaktionen und somit zu einer gleichmäßigen Braunfärbung des Steins, nicht nur an seiner Oberfläche führt. Das Verfahren kann auf jede Art von Gestein angewendet werden, solange das Gestein ausreichend säurefest ist, um seine physikalischen Eigenschaften und insbesondere die Festigkeit auch nach der Bildung der Säure aus den sauer reagierenden Salzen zu behalten.

Prinzipiell ist eine große Zahl von sauer reagierenden Salzen im Rahmen der vorliegenden Erfindung verwendbar, wobei den Sulfaten eine besondere Bedeutung zukommt, da in wässrigen Lösungen von Sulfaten Schwefelsäure gebildet wird, welche auf Grund der bereits erwähnten Hygroskopizität geeignet ist, die Saccharose zu destabilisieren. Um eine umweltverträgliche und ungiftige Verfahrensführung und somit ein gesundheitlich unbedenkliches Produkt bereitstellen zu können, ist das Verfahren mit Vorteil dahingehend weitergebildet, dass als sauer reagierendes Salz Eisensulfat verwendet wird. Eisensulfat, welches zweiwertig als FeSO₄ oder dreiwertig als Fe₂(SO₄)₃ vorliegen kann, ist überaus kostengünstig erhältlich und besitzt mit Eisen ein toxikologisch unbedenkliches Kation, wobei das Eisen in Form seiner Hydroxide und Oxide zusätzlich zur Braunfärbung durch die Bräunungsprodukte des Zuckers beitragen kann.

Die Aufbringung der Färbelösung auf den Stein zielt darauf ab, eine gleichmäßige Verteilung der Färbelösung zu erreichen, sodass diese gleichmäßig in Risse und Poren im Stein eindringen kann, sodass eine Färbung des Steins nicht nur an seiner Oberfläche, sondern vor allem auch bis zu einer gewissen Schichttiefe erfolgen kann. Prinzipiell sind hier alle möglichen Aufbringungsverfahren, wie Sprühen und Aufstreichen denkbar, wobei die Erfindung bevorzugt dahingehend weitergebildet ist, dass die Färbelösung bei einer Temperatur von 30°C bis 80°C als Bad vorgehalten wird, in welches der zu färbende Stein eingetaucht wird. Das Temperieren der Färbelösung in einem Bad stellt die Löslichkeit der eingesetzten Stoffe sicher, wobei gleichzeitig die Oberflächenspannung herabgesetzt wird, sodass die Färbelösung leichter in den Stein eindringen kann. Die Erfindung ist hierbei bevorzugt dahingehend weitergebildet, dass die Färbelösung bei einer Temperatur von 40°C vorgehalten wird, was sich bei Versuchen mit Saccherose als Zucker und Fe₂(SO₄)₃ als Salz als eine ausreichend hohe Temperatur für eine effektive Färbung erwiesen hat.

Bei dem eingangs beschriebenen Verfahren zum Färben von Edel- und Halbedelsteinen, wurden die Steine überaus lange in der Zuckerlösung gehalten, wobei Haltezeiten von bis zu 14 Tagen üblich waren. Derartig lange Haltezeiten sind zur Herstellung von gefärbtem Stein für die Verwendung als Baustoff nicht wirtschaftlich und die Erfindung kann bevorzugt so ausgeführt werden, dass der zu färbende Stein über eine Dauer von 15 Minuten bis 15 Stunden in dem Bad gehalten wird. Bei der Verwendung der erfindungsgemäßen Färbelösung hat sich trotz der relativ kurzen Verweildauer eine ausreichende Durchsetzung des Steins mit Färbelösung und eine zufriedenstellende Färbung herausgestellt. Insbesondere hat sich eine bevorzugte Verfahrensführung herausgestellt, bei der der zu färbende Stein über eine Dauer von 30 Minuten in dem Bad gehalten wird.

Um ein effizientes Eindringen der Färbelösung in den Stein zu erreichen, hat es sich als bevorzugt herausgestellt, dass das Bad während der Haltezeit des Steins umgewälzt wird, wobei auch andere Methoden denkbar sind, um eine gewisse dynamische Beaufschlagung der Gesteinsoberfläche zu erreichen. So kann beispielsweise auch der Stein in dem Bad bewegt werden oder die Erfindung kann mit Vorteil dahingehend weitergebildet sein, dass das Bad als Ultraschallbad ausgebildet ist.

Wie bereits eingangs erwähnt, ermöglicht es die Kombination von gelöstem Zucker und der sich aus dem sauer reagierenden Salz bildenden Säure und insbesondere Schwefelsäure, die Farbreaktionen bei niedrigerer Temperatur ablaufen zu lassen, als normalerweise für derartige Reaktionen erforderlich ist. Bevorzugt ist das erfindungsgemäße Verfahren daher dahingehend weitergebildet, dass die Hitzebehandlung bei einer Temperatur von 200°C bis 400°C und über eine Dauer von 15 bis 60 Minuten durchgeführt wird, wobei sich als besonders schonende und dennoch effiziente Verfahrensführung eine Verfahrensführung herausgestellt hat, bei welcher die Hitzebehandlung bei einer Temperatur von 250°C und über eine Dauer von 30 Minuten durchgeführt wird. Bei einer Hitzebehandlung bei 250°C über eine Dauer von 30 Minuten hat sich bei Verwendung von Zuckerlösung mit Fe₂(SO₄)₃ als Färbelösung, welche Färbelösung auf Granit aufgebracht wurde, eine homogene Braunfärbung des Granits unter gleichzeitiger Beibehaltung der kristallinen Struktur ergeben. Der erhaltene braun gefärbte Granit erfuhr keine Schwächung seiner Festigkeit, wobei durch die Einlagerung der Bräunungsprodukte der Granit nach der Behandlung mit dem erfindungsgemäßen Verfahren insgesamt dichter war und eine verringerte Wasseraufnahme zeigte, was auf eine verbesserte Haltbarkeit des behandelten Granits schließen lässt.

Wenn besonders dichte Steine und somit Steine mit einer geringen Wasseraufnahme dem erfindungsgemäßen Verfahren unterworfen werden sollen, kann das erfindungsgemäße Verfahren mit Vorteil dahingehend weitergebildet sein, dass der Stein vor dem Aufbringen der Färbelösung einer Hitzebehandlung unterzogen wird. Diese Hitzebehandlung ist von der Hitzebehandlung nach dem Aufbringen der Färbelösung zu unterscheiden und die Dauer der Behandlung ist hierbei von untergeordneter Bedeutung, solange der Stein bis in die Tiefe ausreichend heiß wird. Durch das Erhitzen und Abkühlen bilden sich Risse, bzw. bereits vorhandene Risse und Poren werden vergrößert, sodass der Zutritt der Färbelösung verbessert wird.

Um eine gleichmäßig gefärbte Oberfläche des Steins zu erreichen, ist es notwendig, überschüssige Färbelösung von der Oberfläche zu entfernen, da diese bei der Hitzebehandlung eine unregelmäßige, fleckige Färbung ergeben würde. Das Verfahren ist daher mit Vorteil dahingehend weitergebildet, dass die Oberfläche des Steins nach dem Aufbringen der Färbelösung gereinigt wird. Dies kann durch Abwischen oder Abspülen erfolgen, wobei es gemäß einer bevorzugten Weiterbildung des erfindungsgemäßen Verfahrens vorgesehen ist, dass die Oberfläche des Steins nach dem Aufbringen der Färbelösung mit Druckluft gereinigt wird, wobei gleichzeitig eine Trocknung der Oberfläche erfolgt und somit eine reduzierte Dauer der Hitzebehandlung erreicht wird.

Die Erfindung wird im Folgenden anhand eines Ausführungsbeispieles näher erläutert. Eine unpolierte Granitplatte wurde mit einer Färbelösung der folgenden Zusammensetzung behandelt:

| | |
|---|---|
| Saccharose | 250 g |
| Fe₂(SO₄)₃ | 100 g |
| Wasser | 650 g |

Diese Färbelösung wurde in einem Bad bei 40°C vorgehalten und die Steinplatte wurde 30 Minuten in dem Bad gehalten. Die Oberfläche wurde abgewischt und bei einer Temperatur von 250°C während 30 Minuten einer Hitzebehandlung unterzogen. Nach der Hitzebehandlung wurde die Platte poliert. Die gefärbte und polierte Platte zeigte die für Granit typische Kristallstruktur, wobei jedoch gegenüber dem ungefärbten Granit eine deutliche braune Färbung beobachtet werden konnte.

## Patentansprüche

1. Verfahren zum Färben von Stein unter Verwendung einer wässrigen Zuckerlösung und unter Anwendung von Hitze, **dadurch gekennzeichnet, dass** in der wässrigen Zuckerlösung zumindest ein sauer oder basisch reagierendes Salz gelöst wird, die so erhaltene Färbelösung auf den Stein aufgebracht und der so behandelte Stein einer Hitzebehandlung unterzogen wird.

2. Verfahren nach Anspruch 1, **dadurch gekennzeichnet, dass** in der wässrigen Zuckerlösung zumindest ein sauer reagierendes Salz gelöst wird, die so erhaltene Färbelösung auf den Stein aufgebracht und der so behandelte Stein einer Hitzebehandlung unterzogen wird.

3. Verfahren nach Anspruch 1 oder 2, **dadurch gekennzeichnet, dass** als sauer reagierendes Salz Eisensulfat verwendet wird.

4. Verfahren nach Anspruch 1, 2 oder 3, **dadurch gekennzeichnet, dass** die Färbelösung bei einer Temperatur von 30°C bis 80°C als Bad vorgehalten wird, in welches der zu färbende Stein eingetaucht wird.

5. Verfahren nach einem der Ansprüche 1 bis 4, **dadurch gekennzeichnet, dass** die Färbelösung bei einer Temperatur von 40°C vorgehalten wird.

6. Verfahren nach einem der Ansprüche 1 bis 5, **dadurch gekennzeichnet, dass** der zu färbende Stein über eine Dauer von 15 Minuten bis 15 Stunden in dem Bad gehalten wird.

7. Verfahren nach einem der Ansprüche 1 bis 6, **dadurch gekennzeichnet, dass** der zu färbende Stein über eine Dauer von 30 Minuten in dem Bad gehalten wird.

8. Verfahren nach einem der Ansprüche 1 bis 7, **dadurch gekennzeichnet, dass** das Bad während der Haltezeit des Steins umgewälzt wird.

9. Verfahren nach einem der Ansprüche 1 bis 8, **dadurch gekennzeichnet, dass** das Bad als Ultraschallbad ausgebildet ist.

10. Verfahren nach einem der Ansprüche 1 bis 9, **dadurch gekennzeichnet, dass** die Hitzebehandlung bei einer Temperatur von 200°C bis 400°C und über eine Dauer von 15 bis 60 Minuten durchgeführt wird.

11. Verfahren nach einem der Ansprüche 1 bis 10, **dadurch gekennzeichnet, dass** die Hitzebehandlung bei einer Temperatur von 250°C und über eine Dauer von 30 Minuten durchgeführt wird.

12. Verfahren nach einem der Ansprüche 1 bis 11, **dadurch gekennzeichnet, dass** der Stein vor dem Aufbringen der Färbelösung einer Hitzebehandlung unterzogen wird.

13. Verfahren nach einem der Ansprüche 1 bis 12, **dadurch gekennzeichnet, dass** die Oberfläche des Steins nach dem Aufbringen der Färbelösung gereinigt wird.

14. Verfahren nach einem der Ansprüche 1 bis 13, **dadurch gekennzeichnet, dass** die Oberfläche des Steins nach dem Aufbringen der Färbelösung mit Druckluft gereinigt wird.
